# EUROPÄISCHE PATENTSCHRIFT

(11) **EP 2 860 553 B1**
(45) Veröffentlichungstag und Bekanntmachung des Hinweises auf die Patenterteilung: **30.12.2015**
(21) Anmeldenummer: 13188153.4
(22) Anmeldetag: 10.10.2013
(51) Int. Cl.: G01V 8/22, G06K 7/10

(54) **Optoelektronischer Sensor und Verfahren zum Erfassen von Objektinformation**
Optoelectronic sensor and method for detecting object information
Capteur optoélectronique et procédé destiné à la saisie d'informations d'objet

(43) Veröffentlichungstag der Anmeldung: 15.04.2015
(73) Patentinhaber: SICK AG, 79183 Waldkirch (DE)
(72) Erfinder: Steinkogler, Dr. Sascha, 79106 Freiburg (DE); Gehring, Roland, 79215 Elzach-Prechtal (DE)
(74) Vertreter: Ludewigt, Christoph

(56) Entgegenhaltungen:
- EP-A1- 0 517 956
- EP-A1- 2 620 894
- DE-A1-102004 051 382
- US-A- 5 438 187
- US-A- 5 479 011
- US-A- 6 024 283
- US-B1- 6 661 521

## Beschreibung

Die Erfindung betrifft einen optoelektronischen Sensor und ein Verfahren zum Erfassen von Objektinformation aus einem Überwachungsbereich nach dem Oberbegriff von Anspruch 1 beziehungsweise 12.

Die verbreitesten Codeleser sind Barcodescanner, welche einen Barcode oder Strichcode mit einem Laserlesestrahl quer zum Code abtasten. Sie werden an Supermarktkassen, zur automatischen Paketidentifikation, Sortierung von Postsendungen oder bei der Gepäckabfertigung in Flughäfen und in anderen Logistikanwendungen häufig eingesetzt. In einer wichtigen Anwendungsgruppe werden die Code tragenden Objekte an dem Codeleser vorbei gefördert. Damit die Objekte in beliebiger Orientierung auf dem Förderer angeordnet werden können, sind oft mehrere Codeleser vorgesehen, um Objekte von mehreren oder allen Seiten aufzunehmen.

Mit der Weiterentwicklung der digitalen Kameratechnologie treten Barcodescanner zwar zunehmend in Konkurrenz mit kamerabasierten Codelesern. Allerdings haben Barcodescanner auf Basis bewegter Laserspots den Vorteil, dass der Lesebereich ohne größeren optischen Konstruktionsaufwand an Tiefe gewinnt, der nur durch die Ausdehnung des Laserspots, d.h. dessen Durchmesser, begrenzt ist.

Besonders bei Anwendungen im Nahbereich unterhalb von einem Meter wäre eine noch größere Tiefe des Lesebereichs wünschenswert, also ein erweiterter Tiefenschärfebereich. Limitiert ist diese Tiefenschärfe durch die sogenannte Kaustik des Laserstrahls, welche die Änderung des Spotdurchmessers als Funktion des Leseabstands beschreibt. Um nämlich einen Barcodebalken auflösen zu können, darf der Spotdurchmesser dessen Breite zumindest nicht signifikant überschreiten. Daher gibt letztlich die Kaustik den Tiefenschärfebereich vor. Eine ähnliche Problematik stellt sich bei nicht codelesenden Laserscannern, deren Auflösungsvermögen ebenfalls durch den Spotdurchmesser beziehungsweise bei asymmetrischem Laserspot durch dessen Ausdehnung innerhalb der Scanebene begrenzt wird.

Herkömmliche Barcodescanner werden für bestimmte Lesebereiche ausgelegt, die wesentlich durch eine fixe Sendeoptik bestimmt sind. In manchen Anwendungen genügt der Tiefenschärfebereich einer fixen Sendeoptik nicht, es muss also die theoretische Grenze der Tiefenschärfe überschritten werden. Dafür sind herkömmlich mechanische Nachführungen der Fokuslage vorgesehen, die beispielsweise durch Verschieben der Kollimationslinse realisiert werden. Der konstruktive Aufwand ist aufgrund der hohen Positioniergenauigkeit bei kurzen Ansprechzeiten erheblich und wirkt sich entsprechend auf die Herstellkosten aus. Zudem sind solche Nachführungen als mechanisch bewegliche Teile wartungsanfällig.

Auf Empfängerseite sind für die Erweiterung des Tiefenschärfebereichs Mehrzonenlinsen bekannt. Einen derartigen optischen Sensor offenbart die EP 1 624 322 B1. Je nach Entfernung eines erfassten Objekts tritt das von dem Objekt kommende Licht durch eine andere Zone der Mehrzonenlinse. Eine sendeseitiger Einsatz der Mehrzonenlinse ist dabei nicht vorgesehen und führt auch nicht ohne Weiteres zum Ziel. Tritt nämlich das Sendelicht nur durch eine Zone aus, so hat man durch die Mehrzonenlinse gegenüber einer einfachen Linse nichts gewonnen. Werden dagegen mehrere Zonen durchstrahlt, so ergibt sich durch Überlagerung sogar noch eine verbreiterte Strahlkaustik.

Aus der US 6 024 283 ist ein Barcodescanner bekannt. Die Scanbewegung wird erreicht, indem mittels eines LCD-Arrays unterschiedliche Teilbereiche des Sendelichts abgeschattet werden, oder indem VCSEL eines VCSEL-Feldes sequentiell aktiviert werden. In einer Ausführungsform wird ein Mikrolinsenfeld im Sendepfad angeordnet, um eine Sequenz von Lichtstrahlen zu erzeugen, die in unterschiedlichen Ebenen fokussiert sind.

Die US 5 438 187 beschreibt eine Mehrfokusoptik für ein Codelesesystem. Durch die mindestens zwei Brennweiten entstehen zwei unterschiedliche Tiefenschärfebereiche und damit ein insgesamt größerer Tiefenschärfenbereich.

Die EP 2 620 894 A1 zeigt eine Zielvorrichtung für einen Codeleser, die durch ein Mikrozylinderlinsenfeld ein Lichtmuster erzeugt, aus dem die Lage des Erfassungsbereichs ablesbar ist.

Die US 6 661 521 befasst sich mit der homogenen Ausleuchtung eines Codebereichs. Dabei können eine Vielzahl von LEDs, die in zwei konzentrischen Kreisen angeordnet sind, gruppenweise angesprochen werden, und zwar als rechte oder linke Gruppe.

Die DE 10 2004 051 382 A1 offenbart ein Mikrolinsenarray für ein Array von Lichtquellen, dessen Linsen im Muster der Lichtquellen angeordnet sind.

Es ist daher Aufgabe der Erfindung, den Tiefenschärfebereich eines auf einem ausgesandten Lichtstrahl basierenden optoelektronischen Sensors zu erweitern.

Diese Aufgabe wird durch einen optoelektronischen Sensor und ein Verfahren zum Erfassen von Objektinformation aus einem Überwachungsbereich nach Anspruch 1 beziehungsweise 12 gelöst. Ein gattungsgemäßer Sensor tastet mit einem ausgesandten Lichtstrahl, dessen Strahlquerschnitt mittels einer Sendeoptik innerhalb eines Tiefenschärfebereichs auf einen vorgegebenen Durchmesser begrenzt ist, ein zu erfassendes Objekt an und wertet das daraufhin empfangene Lichtsignal aus. Die Erfindung geht dann von dem Grundgedanken aus, in der Sendeoptik mindestens zwei Teiloptikbereiche mit unterschiedlichen strahlformenden Eigenschaften vorzusehen. Die beiden Teiloptikbereiche haben also beispielsweise unterschiedliche Brennweiten oder sonstige optische Eigenschaften, welche zu einer unterschiedlichen Kaustik des ausgesandten Lichtstrahls führen. Nach den einleitenden Erläuterungen korrespondiert die Kaustik mit dem Tiefenschärfebereich. Somit kann, indem dafür gesorgt wird, dass wahlweise ein bestimmter Teiloptikbereich strahlformend auf den ausgesandten Lichtstrahl wirkt, der Tiefenschärfebereich verändert beziehungsweise verschoben werden.

Die Erfindung hat den Vorteil, dass eine besonders kostengünstige Erweiterung des Tiefenschärfebereichs auch über die theoretische Grenze einer fixen Laserstrahlkaustik hinaus ermöglicht wird. Auf aufwändige und teure mechanische Fokusverstellungen zur Nachführung der Sendeoptik kann verzichtet werden. Effektiv wird damit eine Fokusverstellfunktion auch für einfache und preiswerte Systeme zugänglich.

Der Lichtsender weist bevorzugt mindestens zwei Lichterzeugungsbereiche auf. Diese Lichterzeugungsbereiche sind einzeln selektierbar, etwa durch einzelne elektrische Ansteuerung. Durch Aktivierung jeweils eines Lichterzeugungsbereichs tritt Licht an einem anderen Ort aus dem Lichtsender aus und trifft damit auf einen anderen Teiloptikbereich. Die Aktivierung eines oder mehrerer bestimmter Lichterzeugungsbereiche ist damit eine Möglichkeit der nicht mechanischen Einstellung des strahlformend wirkenden Teiloptikbereichs.

Der Lichtsender weist bevorzugt eine Vielzahl von Lichtquellen auf. Das erhöht die optische Ausgangsleistung und bietet eine Möglichkeit, selektiv Licht durch bestimmte Teiloptikbereiche auszusenden, indem einzelne Lichtquellen oder Gruppen von Lichtquellen aktiviert, deaktiviert oder abgeschattet werden. Die Vielzahl kann durch einzelne Lichtquellen wie LEDs oder Kantenemitter gebildet sein. Vorzugsweise ist ein VCSEL-Array oder ein LED-Array vorgesehen.

Dem Lichtsender ist vorzugsweise eine variable Blende oder ein variables Abschattungselement zugeordnet. Als Abschattungselement eignet sich besonders ein Element mit elektronisch veränderbarer Lichtdurchlässigkeit, etwa ein LCD. Die variable Blende oder das variable Abschattungselement legt einen einstellbaren Bereich des Lichtsenders fest, wo Licht tatsächlich abgestrahlt wird und einen entsprechenden Teiloptikbereich trifft. Damit muss nicht schon der Lichtsender selbst die Möglichkeit bieten, einzelne Lichterzeugungsbereiche zu aktivieren. Als Lichtsender ist dann auch ein Flächenstrahler oder ein Array von gleichzeitig aktiven Lichtquellen denkbar. Die Abstrahlcharakteristik des Lichtsenders kann zusätzlich mit einer geeigneten Optik, wie einer Linse, einem Mikrolinsenarray oder einem diffraktiven optischen Element, oder durch verspiegelte Tuben definiert werden.

Die Sendeoptik weist bevorzugt eine Linse mit ausgeprägten Abbildungsfehlern auf. Damit sind Abbildungsfehler gemeint, die nicht unvermeidlich als Artefakt der Herstellung oder Ergebnis einer anderweitigen Optimierung verbleiben, sondern gezielt eindesignt werden. Unterschiedliche Bereiche dieser Linse wirken also durch die Abbildungsfehler praktisch wie verschiedene Linsen, nicht nur wie eine Linse mit kleinen Ungenauigkeiten. Der Tiefenschärfebereich von Teiloptikbereichen variiert durch die Abbildungsfehler deutlich. Ein geeigneter Abbildungsfehler ist die sphärische Aberration, die effektiv zu unterschiedlichen Brennweiten im Zentrum und Außenbereich der Linse führt.

Die Sendeoptik weist bevorzugt eine Mehrzonenlinse auf. Das geht dann über einen Abbildungsfehler einer mit glatten Konturen hergestellten Linse hinaus, denn es gibt hier sprunghafte Übergänge der Abbildungseigenschaften von Zone zu Zone. Die Zonen sind beispielsweise als konzentrische Ringe oder als Facetten ausgebildet. Eine oder mehrere Zonen entsprechen einem Teiloptikbereich. Anstelle einer refraktiven ist eine reflexive Sendeoptik denkbar, also insbesondere ein facettierter Hohlspiegel oder ein Mehrzonenspiegel. Auch eine diffraktive Sendeoptik (DOE, diffraktives optisches Element) ist prinzipiell denkbar. Hier können nahezu beliebige Strahlformungseigenschaften pro Teiloptikbereich vorgegeben und entsprechende diffraktive Strukturen geprägt werden.

Die Sendeoptik weist bevorzugt ein Mikrooptikfeld auf. Als Mikrooptiken kommen in erster Linie Mikrolinsen in Betracht, die aber zumindest teilweise mit Mikrospiegeln, Mikroprismen und dergleichen ersetzt sein können. Um in einem Mikrooptikfeld die Teiloptikbereiche zu bilden, unterscheiden sich die Mikrooptiken gruppenweise, etwa bei Mikrolinsen durch unterschiedliche Brennweiten. Prinzipiell sind anstelle von Mikrooptiken auch mehrere nebeneinander liegende Makrooptiken, insbesondere Makrolinsen und Hohlspiegel denkbar. Das erfordert aber Bauraum und eine entsprechende Ausdehnung des Lichtsenders, damit die verschiedenen Makrooptiken tatsächlich als wirkende Teiloptikbereiche einstellbar bleiben.

Die Sendeoptik ist bevorzugt radial oder umlaufend in Teiloptikbereiche und der Lichtsender entsprechend radial oder umlaufend in Lichterzeugungsbereiche unterteilt. Eine radiale Unterteilung bedeutet eine sternförmige Segmentierung in tortenstückartige Winkelbereiche. Eine umlaufende Segmentierung dagegen führt zu konzentrischen Ringen. Beides kann miteinander kombiniert werden. Vorzugsweise entspricht sich die Unterteilung von Sendeoptik und Lichtsender, so dass jedem Lichterzeugungsbereich ein gleichartiger Teiloptikbereich mit geeigneten Abmessungen, in geeignetem Abstand und in geeigneter Orientierung zugewandt ist, so dass Licht aus einem jeweiligen Lichterzeugungsbereich gerade von dem zugehörigen Teiloptikbereich strahlgeformt wird.

Lichtsender und Sendeoptik sind bevorzugt radial beweglich zueinander oder gegeneinander verdrehbar angeordnet. Ein radiales Verschieben eignet sich besonders bei umlaufender Segmentierung, weil dadurch eine jeweils veränderte Zuordnung zwischen Ringen von Lichtsender und Sendeoptik erreicht wird. Entsprechend eignet sich eine Rotation besonders bei radialer Segmentierung, welche die jeweiligen Winkelbereiche in eine veränderte Zuordnung dreht.

Die Steuer- und Auswertungseinheit ist bevorzugt dafür ausgebildet, die Einstellung der Teiloptikbereiche sequentiell, insbesondere periodisch zu verändern. Dadurch können mehrere Erfassungs- oder Leseversuche bei unterschiedlicher Strahlkaustik und damit verändertem Tiefenschärfebereich durchprobiert werden. Alternativ wird ein Lesebereich für einen bekannten oder erwarteten Objektabstand fest vorgegeben und der passende Teiloptikbereich einmalig eingestellt. Nochmals alternativ wird der aktuelle Objektabstand gemessen und der Tiefenschärfebereich analog zu bekannten Autofokussystemen durch Einstellung eines passenden Teiloptikbereichs dynamisch nachgeführt.

Der Sensor ist bevorzugt als Laserscanner, insbesondere Barcodescanner, mit einer Ablenkeinheit ausgebildet, mit deren Hilfe der ausgesandte Lichtstrahl den Überwachungsbereich abtastet. Die Ablenkeinheit bewegt den tastenden Lichtstrahl über das Objekt beziehungsweise den Barcode. Durch den angepassten Tiefenschärfebereich wird gerade auch im Nahbereich eine höhere Objektauflösung erzielt und das Lesen von Barcodes mit kleineren Strukturen möglich.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners;
- Fig. 2: eine Darstellung einer Linse mit sphärischer Aberration und deren Strahlführung;
- Fig. 3: eine Beleuchtungseinrichtung mit einstellbaren Teiloptikbereichen;
- Fig. 4a: die Strahlkaustik bei Einstellung des äußeren Teiloptikbereichs der Beleuchtungseinrichtung gemäß Figur 3; und
- Fig. 4b: die Strahlkaustik bei Einstellung des inneren Teiloptikbereichs der Beleuchtungseinrichtung gemäß Figur 3.

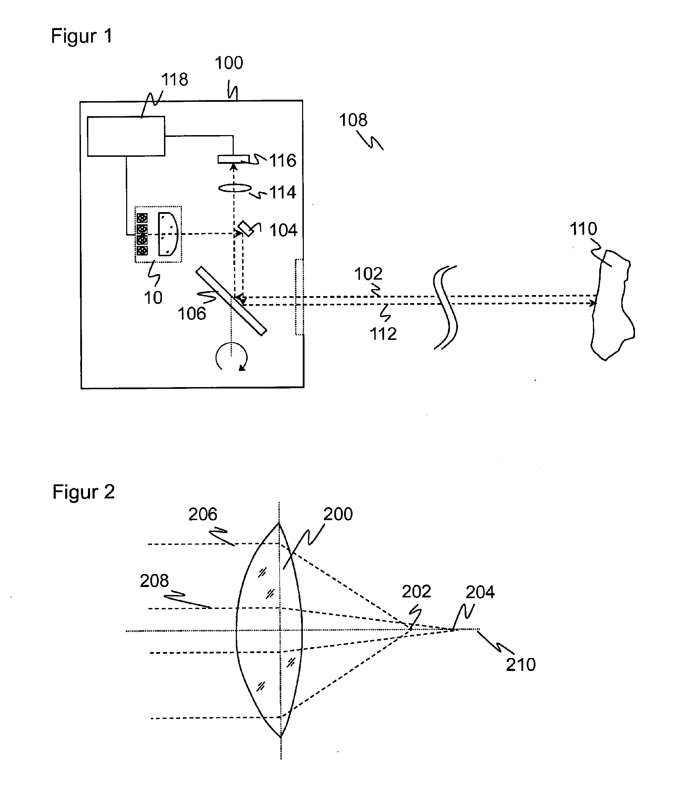

Figur 1 zeigt einen Laserscanner 100 als Ausführungsform eines optoelektronischen Sensors. Der Laserscanner 100 kann beispielsweise als abstandsmessender Sensor, um Oberflächenreliefs oder Konturbilder einer Szenerie auszunehmen, oder als Codeleser ausgebildet sein. Andere optoelektronische Sensoren mit einem Sendelichtstrahl, beispielsweise Lichttaster, sind aber ebenso denkbar.

In einer weiter unten genauer erläuterten Beleuchtungseinrichtung 10 erzeugt ein Lichtsender über eine Sendeoptik einen Sendelichtstrahl 102 mit einer veränderbaren Strahlkaustik. Mit Hilfe eines Umlenkspiegels 104 wird der Sendelichtstrahl 102 auf einen Drehspiegel 106 und von dort in einen Erfassungsbereich 108 gelenkt. Nach Reflexion oder Remission an einem Objekt 110 kehrt das Licht als Empfangslichtstrahl 112 über den Drehspiegel 106 und eine Empfangsoptik 114 zu einem Lichtempfangselement 116 zurück. Dort wird das Empfangslicht in ein elektrisches Signal umgewandelt und in einer Auswertungseinheit 118 weiter verarbeitet. Dazu wird beispielsweise anhand der Lichtlaufzeit des Sende- und Empfangslichtstrahls 102, 112 der Abstand des Objekts 110 berechnet oder die Abtastinformation als Code, insbesondere Barcode ausgelesen.

Figur 2 zeigt eine Linse 200 mit deren Strahlführung zur Erläuterung des Abbildungsfehlers der sphärischen Aberration, der in der Beleuchtungseinrichtung 10 vorteilhaft ausgenutzt werden kann. Die sphärische Aberration zeigt sich in unterschiedlichen Fokuslagen 202, 204 von Strahlen 206, 208, die mit unterschiedlichem Abstand zur optischen Achse 210 auf die Linse 200 treffen.

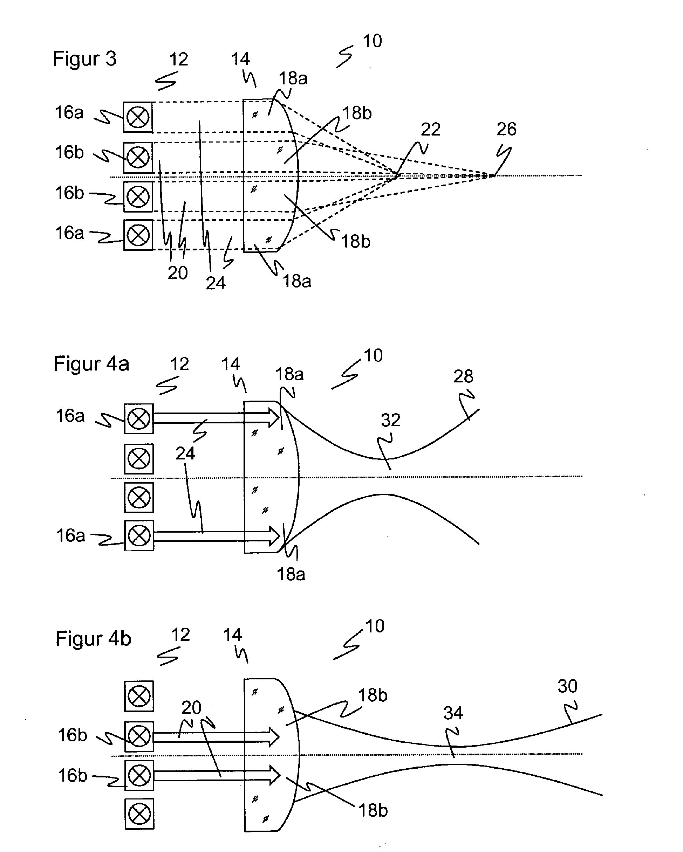

Figur 3 zeigt in einer Schnittdarstellung eine Ausführungsform der Beleuchtungseinrichtung 10 mit einem Lichtsender 12 und einer Sendeoptik 14. Der Lichtsender 12 ist flächig ausgedehnt und weist dazu eine Vielzahl von Lichtquellen 16a-b auf, beispielsweise indem ein VCSEL- oder LED-Array eingesetzt wird. Als Sendeoptik 14 dient in dieser Ausführungsform eine Linse mit ausgeprägter sphärischer Aberration. Dieser ausgeprägte Abbildungsfehler führt effektiv zu unterschiedlichen Teiloptikbereichen 18a-b mit unterschiedlichen Strahlformungseigenschaften. Dadurch werden innere Lichtstrahlen 20 in einen näheren Punkt 22 und äußere Lichtstrahlen 24 in einen ferneren Punkt 26 fokussiert.

Die einzelnen Lichtquellen 16a-b oder Gruppen davon sind durch elektrische Ansteuerung unabhängig voneinander elektrisch ansteuerbar, und damit ist der Lichtsender 14 in unterschiedlichen räumlichen Zonen aktivierbar. Somit können unterschiedliche Teiloptikbereiche 18a-b der Sendeoptik 14 beleuchtet werden, die wegen der sphärischen Aberration unterschiedliche Fokuslagen der jeweils austretenden Lichtstrahlen 20, 24 aufweisen. Dadurch wird ein verändertes Strahlformungsverhalten der Sendeoptik 14 und in dessen Folge eine variable Strahlkaustik mit entsprechend veränderbarem Tiefenschärfebereich erzielt. Beispielsweise werden mit den in dieser Ausführungsform vorzugsweise radialsymmetrischen Gruppen von Lichtquellen 16a-b durch sequentielle Ansteuerung unterschiedliche Fokuslagen entsprechend den Punkten 22, 26 abgedeckt. Im Gesamten wird dadurch der Tiefenschärfebereich erweitert.

Figur 4 illustriert diesen Effekt weiter. Dabei zeigt Figur 4a einen Zustand, in dem die äußeren Lichtquellen 16a aktiviert sind, und Figur 4b entsprechend einen Zustand mit aktivierten inneren Lichtquellen 16b. Die radiale Zweiteilung ist rein beispielhaft, ebenso können für Lichtsender 12 wie Sendeoptik 14 zusätzliche radiale oder anders geformte Unterteilungen vorgesehen sein. Die äußeren Lichtstrahlen 24 der äußeren Lichtquellen 16a werden wie bereits zu Figur 3 erläutert in dem näheren Punkt 22, die achsnäheren inneren Lichtstrahlen 20 der inneren Lichtquellen 16b dagegen in dem ferneren Punkt 24 fokussiert. Es entstehen unterschiedliche Strahlkaustiken 28, 30.

Ein Umschalten der Lichtquellen 16a-b bewirkt daher, dass unterschiedliche Teiloptikbereiche 18a-b auf das Sendelicht wirken, und schaltet so auch die Strahlkaustiken 28, 30. Typischerweise bildet sich in der Strahlkaustik 28, 30 eine Art Einschnürung mit einem Bereich 32, 34 besonders geringer Strahlausdehnung, in dessen Umgebung der jeweilige Tiefenschärfebereich liegt. Wie aus einem Vergleich von Figur 4a und Figur 4b unmittelbar ersichtlich, verschiebt sich dieser Bereich 32, 34 durch das Umschalten. Zumindest sequentiell kann dadurch der Tiefenschärfebereich insgesamt erweitert werden. Dies wird beispielsweise durch periodisches Umschalten oder gezieltes Umschalten auf einen zu dem angenommenen oder gemessenen Objektabstand passenden Bereich 32, 34 ausgenutzt.

Die Sendeoptik 14 in Form eine Linse mit ausgeprägter sphärischer Aberration ist nur ein Ausführungsbeispiel. Es gibt zahlreiche Alternativen von Sendeoptiken mit Teiloptikbereichen 18a-b, die untereinander unterschiedliche strahlformende Eigenschaften aufweisen, welche zu einem jeweils anderen Tiefenschärfebereich führen. Beispielsweise kann eine facettierte oder Mehrzonenoptik auf Basis von sphärischen, asphärischen oder sogar Zylinderlinsen verwendet werden. Dazu eignen sich auch Fresnellinsen mit Zonen unterschiedlicher Fokuslagen. Ebenso denkbar ist der Einsatz von diffraktiven oder reflektiven statt refraktiven Optiken, also DOEs oder Hohlspiegeln. Ein weiteres Beispiel mit besonders vielen Freiheitsgraden zur Gestaltung von Teiloptikbereichen 18a-b sind Mikro- oder auch Makrooptikarrays insbesondere mit Linsen unterschiedlicher Brennweiten.

Auch alternative Ausgestaltungen des Lichtsenders 12 sind denkbar. Vorteilhaft ist die Möglichkeit, verschiedene Bereiche eines flächig ausgedehnten Lichtsenders 12 elektrisch unabhängig voneinander ansteuern zu können. Das gelingt mit VCSEL-Arrays, aber auch mit LED-Arrays oder getrennt ansteuerbaren Kantenemittern, wobei die jeweiligen Lichtquellen 16 vorzugsweise bereits vorkollimiertes Licht emittieren. Denkbar sind auch homogen ausgeleuchtete Lichtquellen ohne schaltbare Bereiche, dafür mit insbesondere elektrisch verstellbaren Aperturen oder Abschattern.

Die Ausführungsformen der Figuren 3 und 4 verwenden eine radialsymmetrische Unterteilung, also im Wesentlichen konzentrische Ringbereiche, die durch die ausgeprägte sphärische Aberration entstehen. Alternativ sind auch Ausführungsformen mit einer umlaufenden Unterteilung möglich, d.h. die Gruppen von Lichtquellen 16a-b und die Teiloptikbereiche 18a-b bilden sternförmige Winkelbereiche oder "Tortenstücke". Die verschiedenen Fokuslagen und damit Tiefenschärfebereiche werden dann durch selektive Beleuchtung bestimmter Segmente mit verschiedener Brechkraft erzielt. Dazu werden nicht notwendigerweise nur Abbildungsfehler ausgenutzt.

In einer weiteren Ausführungsform werden Lichtsender 12 und Sendeoptik 14 relativ zueinander bewegt, so dass sich die Zuordnung zwischen Gruppen von Lichtquellen 16a-b und Teiloptikbereichen 18a-b verändert. Je nach Unterteilung gelingt dies durch radiales Verschieben, also einen lateralen Versatz quer zur optischen Achse, oder Verdrehen. Wie bei allen Veränderungen des Tiefenschärfebereichs erfolgt diese Änderung einmalig und bleibt dann für eine gewisse Betriebsdauer statisch, oder der Tiefenschärfebereich wird in einer Nachführung dynamisch gewechselt.

## Patentansprüche

1. Optoelektronischer Sensor (100) zum Erfassen von Objektinformationen aus einem Überwachungsbereich (108), wobei der Sensor (100) einen Lichtsender (12) mit einer zugeordneten Sendeoptik (14) zur Strahlformung eines ausgesandten Lichtstrahls (102, 20, 24) und Begrenzung von dessen Strahlquerschnitt auf einen vorgegebenen Durchmesser in einem Tiefenschärfebereich, einen Lichtempfänger (116) zum Erzeugen eines Empfangssignals aus dem reflektierten Lichtstrahl (112) und eine Steuer- und Auswertungseinheit (118) zur Gewinnung von Objektinformationen aus dem Empfangssignal aufweist, wobei die Sendeoptik (14) mindestens zwei Teiloptikbereiche (18a-b) mit unterschiedlichen strahlformenden Eigenschaften aufweist und der Teiloptikbereich (18a-b), welcher strahlformend auf den ausgesandten Lichtstrahl (20, 24) wirkt, einstellbar ist, um den Tiefenschärfebereich zu verändern,
**dadurch gekennzeichnet,**
**dass** die Sendeoptik (14) durch eine Linse mit einer ausgeprägten sphärischen Aberration oder durch eine Mehrzonenlinse umlaufend in Teiloptikbereiche (18a) und der Lichtsender (12) entsprechend umlaufend in Lichterzeugungsbereiche (16a-b) unterteilt ist.

2. Sensor (100) nach Anspruch 1,
wobei der Lichtsender (12) eine Vielzahl von Lichtquellen (16a-b) aufweist, insbesondere ein VCSEL-Array oder ein LED-Array.

3. Sensor (100) nach Anspruch 1 oder 2,
wobei dem Lichtsender (12) eine variable Blende oder ein variables Abschattungselement zugeordnet ist.

4. Sensor (100) nach einem der vorhergehenden Ansprüche,
wobei die Sendeoptik (14) radial in Teiloptikbereiche (18a-b) und der Lichtsender (12) entsprechend radial in Lichterzeugungsbereiche (16a-b) unterteilt ist.

5. Sensor (100) nach einem der vorhergehenden Ansprüche,
wobei Lichtsender (12) und Sendeoptik (14) radial beweglich zueinander oder gegeneinander verdrehbar angeordnet sind.

6. Sensor (100) nach einem der vorhergehenden Ansprüche,
wobei die Steuer- und Auswertungseinheit (118) dafür ausgebildet ist, die Einstellung der Teiloptikbereiche (18a-b) sequentiell, insbesondere periodisch zu verändern.

7. Sensor (100) nach einem der vorhergehenden Ansprüche,
der als Laserscanner, insbesondere Barcodescanner, mit einer Ablenkeinheit (106) ausgebildet ist, mit deren Hilfe der ausgesandte Lichtstrahl (102, 20, 24) den Überwachungsbereich (108) abtastet.

8. Verfahren zum Erfassen von Objektinformationen aus einem Überwachungsbereich (108), bei dem ein in den Überwachungsbereich (108) ausgesandter Lichtstrahl (102, 20, 24) durch eine Sendeoptik (14) strahlgeformt wird, um dessen Strahlquerschnitt auf einen vorgegebenen Durchmesser in einem Tiefenschärfebereich zu begrenzen, wobei aus dem in dem Überwachungsbereich (108) reflektierten Lichtstrahl (112) ein Empfangssignal erzeugt und daraus Objektinformationen gewonnen werden, wobei die Anordnung zwischen Lichtsender (12) und Sendeoptik (14) geändert oder nur einer von mindestens zwei Lichterzeugungsbereichen (16a-b) des Lichtsenders (12) aktiviert wird, damit der ausgesandte Lichtstrahl (20, 24) nur durch einen Teiloptikbereich (18a-b) von mindestens zwei Teiloptikbereichen (18a-b) der Sendeoptik (14) strahlgeformt und so ein zu dem Teiloptikbereich (18a-b) gehöriger Tiefenschärfebereich eingestellt wird,
**dadurch gekennzeichnet,**
**dass** die Sendeoptik (14) durch eine Linse mit einer ausgeprägten sphärischen Aberration oder durch eine Mehrzonenlinse umlaufend in Teiloptikbereiche (18a) und der Lichtsender (12) entsprechend umlaufend in Lichterzeugungsbereiche (16a-b) unterteilt ist und dass durch Umschalten der Lichterzeugungsbereiche (16a-b) wahlweise äußere Lichtstrahlen (24) oder innere Lichtstrahlen (20) erzeugt werden und dadurch die Strahlkaustik (28, 30) geschaltet wird.

## Claims

1. An optoelectronic sensor (100) for the detection of object information from a monitored zone (108), wherein the sensor (100) comprises a light transmitter (12) having an associated transmission optics (14) for the beam formation of a transmitted light beam (102, 20, 24) and for limiting its beam cross-section to a predefined diameter in a depth of field range, a light receiver (116) for the generation of a received signal from the reflected light beam (112); and a control and evaluation unit (118) for the extraction of object information from the received signal, wherein the transmission optics (14) has at least two optical part regions (18a-b) having different beam forming properties and wherein the optical part region (18a-b), which acts in a beam forming manner with respect to the transmitted light beam (20, 24), can be set in order to change the depth of field range,
**characterized in that**
the transmission optics (14) is formed by a lens having a pronounced spherical aberration or by a multi-zone lens divided circumferentially into optical part regions (18a) and the light transmitter (12) is correspondingly divided circumferentially into light generation regions (16a-b).

2. A sensor (100) in accordance with claim 1,
wherein the light transmitter (12) has a plurality of light sources (16a-b), in particular a VCSEL array or an LED array.

3. A sensor (100) in accordance with claim 1 or claim 2,
wherein a variable aperture or a variable shading element is associated with the light transmitter (12).

4. A sensor (100) in accordance with any one of the preceding claims,
wherein the transmission optics (14) is divided radially into optical part regions (18a-b) and the light transmitter (12) is correspondingly divided radially into light generation regions (16a-b).

5. A sensor (100) in accordance with any one of the preceding claims,
wherein the light transmitter (12) and the transmission optics (14) are arranged radially movable with respect to one another or can be rotated against one another.

6. A sensor (100) in accordance with any one of the preceding claims,
wherein the control and evaluation unit (118) is configured to sequentially vary the setting of the optical part regions (18a-b), in particular to periodically vary the setting of the part optical regions (18a-b).

7. A sensor (100) in accordance with any one of the preceding claims, which is configured as a laser scanner, in particular as a barcode scanner, having a deflection unit (106) with the aid of which the transmitted light beam (102, 20, 24) scans the monitored zone (108).

8. A method for the detection of object information from a monitored zone (108) in which a light beam (102, 20, 24) transmitted into the monitored zone (108) is beam-formed by a transmission optics (14) in order to limit its beam cross-section to a predefined diameter in a depth of field range, wherein a received signal is generated from the light beam (112) reflected from the monitored zone (108) and object information is extracted therefrom, wherein the arrangement between the light transmitter (12) and the transmission optics (14) can be changed or only one of the at least two light generation regions (16a-b) of the light transmitter (12) is activated, such that the transmitted light beam (20, 24) is beam-formed only by an optical part region (18a-b) of at least two optical part regions (18a-b) of the transmission optics (14) and a depth of field range associated with the optical part region (18a-b) is thereby set,
**characterized in that**
the transmission optics (14) is formed by a lens having a pronounced spherical aberration or by a multi-zone lens divided circumferentially into optical part regions (18a-b) and the light transmitter (12) is correspondingly divided circumferentially into light generation regions (16a-b) and **in that** outer light beams (24) or inner light beams (20) can be generated by selectively switching the light generation regions (16a-b) and the beam caustic (28, 30) is thereby switched.

## Revendications

1. Capteur optoélectronique (100) pour détecter des informations d'objet depuis une zone de surveillance (108), dans lequel le capteur (100) comprend un émetteur de lumière (12) avec une optique d'émission (14) associée pour la mise en forme d'un rayonnement de lumière émis (102, 20, 24) et pour la limitation de la section du rayonnement à un diamètre prédéterminé dans une plage de netteté en profondeur, un récepteur de lumière (116) pour engendrer un signal de réception à partir du rayonnement lumineux réfléchi (112) et une unité de commande et d'évaluation (118) pour récupérer des informations d'objet à partir du signal de réception, dans lequel l'optique d'émission (14) comprend au moins deux zones optiques partielles (18a-b) avec des propriétés différentes quant à la mise en forme du rayonnement et la zone optique partielle (18a-b) qui agit sur le rayonnement lumineux émis (20, 24) pour la mise en forme du rayonnement est réglable afin de modifier la plage de netteté en profondeur,
**caractérisé en ce que**
l'optique d'émission (14) est subdivisée par une lentille avec une aberration sphérique prononcée ou par une lentille à zones multiples de façon périphérique en zones optiques partielles (18a) et l'émetteur de lumière (12) est subdivisé de façon correspondante de façon périphérique en zones de génération de lumière (16a-b).

2. Capteur (100) selon la revendication 1,
dans lequel l'émetteur de lumière (12) comprend une pluralité de sources de lumière (16a-b), en particulier un réseau VCSEL ou un réseau de diodes électroluminescentes.

3. Capteur (100) selon la revendication 1 ou 2, dans lequel un diaphragme variable ou un élément d'obscurcissement variable est associé à l'émetteur de lumière (12).

4. Capteur (100) selon l'une des revendications précédentes,
dans lequel l'optique d'émission (14) est subdivisée radialement en zones optiques partielles (18a-b), et l'émetteur de lumière (12) est subdivisé de façon correspondante radialement en zones de génération de lumière (16a-b).

5. Capteur (100) selon l'une des revendications précédentes,
dans lequel l'émetteur de lumière (12) et l'optique d'émission (14) sont agencés de façon mobile radialement l'un par rapport à l'autre pour capable de rotation l'un par rapport à l'autre.

6. Capteur (100) selon l'une des revendications précédentes,
dans lequel l'unité de commande et d'évaluation (118) est réalisée pour modifier le réglage des zones optiques partielles (18a-b) de manière séquentielle, en particulier périodiquement.

7. Capteur (100) selon l'une des revendications précédentes,
qui est réalisé sous forme de scanner à laser, en particulier de scanner de code à barres, avec une unité de déflexion (106) au moyen de laquelle le rayonnement lumineux émis (102, 20, 24) balaye la zone de surveillance (108).

8. Procédé pour détecter des informations d'objet depuis une zone de surveillance (108), dans lequel un rayonnement lumineux (102, 20, 24) émis dans la zone de surveillance (108) est mis en forme par une optique d'émission (14) afin de limiter la section du rayonnement à un diamètre prédéterminé dans une plage de netteté en profondeur, dans lequel on engendre à partir du rayonnement lumineux (112) réfléchi dans la zone de surveillance (108) un signal de réception et on récupère à partir de celui-ci des informations d'objet, dans lequel l'agencement entre l'émetteur de lumière (12) et l'optique d'émission (14) est modifié ou bien on active une seule parmi au moins deux zones de génération de lumière (16a-b) de l'émetteur de lumière afin que le rayonnement de lumière émis (20, 24) soit mis en forme seulement par une zone optique partielle (18a-b) parmi au moins deux zones optiques partielles (18a-b) de l'optique d'émission (14) et qu'on règle ainsi une plage de netteté en profondeur associée à la zone optique partielle (18a-b),
**caractérisé en ce que**
l'optique d'émission (14) est subdivisée par une lentille avec une aberration sphérique prononcée ou par une lentille à zones multiples de façon périphérique en zones optiques partielles (18a) et l'émetteur de lumière (12) est subdivisée de manière correspondante de façon périphérique en zones de génération de lumière (16a-b), et **en ce que** par commutation des zones de génération de lumière (16a-b) on engendre sélectivement des rayonnements de lumière extérieure (24) ou des rayonnements de lumière intérieure (20) et on commute de ce fait la caustique du rayonnement (28, 30).
